(19) Europäisches Patentamt
European Patent Office
Office européen des brevets

(11) **EP 3 204 808 B1**

(12) **EUROPÄISCHE PATENTSCHRIFT**

(45) Veröffentlichungstag und Bekanntmachung des Hinweises auf die Patenterteilung:
**05.05.2021 Patentblatt 2021/18**

(21) Anmeldenummer: **15736518.0**

(22) Anmeldetag: **15.07.2015**

(51) Int Cl.:
**G02B 7/36** *(2021.01)*          **G02B 21/24** *(2006.01)*
**G02B 21/36** *(2006.01)*

(86) Internationale Anmeldenummer:
**PCT/EP2015/066104**

(87) Internationale Veröffentlichungsnummer:
**WO 2016/055177 (14.04.2016 Gazette 2016/15)**

(54) **MIKROSKOP**

MICROSCOPE

MICROSCOPE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.10.2014 DE 102014114476**

(43) Veröffentlichungstag der Anmeldung:
**16.08.2017 Patentblatt 2017/33**

(73) Patentinhaber: **Leica Microsystems (Schweiz) AG 9435 Heerbrugg (CH)**

(72) Erfinder:
• **HONEGGER, Marc**
**CH-8590 Romanshorn (CH)**
• **SCHNITZLER, Harald**
**CH-9450 Lüchingen (CH)**
• **ZUEST, Reto**
**CH-9444 Diepoldsau (CH)**

(74) Vertreter: **Schaumburg und Partner Patentanwälte mbB**
**Postfach 86 07 48**
**81634 München (DE)**

(56) Entgegenhaltungen:
DE-A1- 2 836 428          US-A- 4 636 051
US-A- 6 128 129          US-A1- 2003 184 855
US-A1- 2004 080 661      US-A1- 2008 099 661
US-A1- 2008 240 528      US-A1- 2013 027 538

EP 3 204 808 B1

**Beschreibung**

Die Erfindung betrifft ein Mikroskop mit einem Autofokussystem mit einem in einem ersten ausgekoppelten Strahlengang angeordneten ersten Bildsensor zum Aufnehmen eines ersten Bildes und einem in einem zweiten ausgekoppelten Strahlengang angeordneten zweiten Bildsensor zum Aufnehmen eines zweiten Bildes.

Bei bekannten, aktiven Autofokussystemen wird eine Hilfsstruktur oder ein Hilfsstrahl auf die Oberfläche des zu untersuchenden Objektes projiziert und die Rückstrahlung ausgewertet. Eine Hilfsstruktur wird dabei typischerweise koaxial zur Beobachtung eingespiegelt. Damit die Hilfsstruktur für einen großen Vergrößerungsbereich der Beobachtung geeignet ist, muss die Projektion jedoch mittels zusätzlicher Optik auf das jeweilige Objektivfeld adaptiert werden. Hilfsstrahlen werden hingegen üblicherweise paraxial projiziert, beispielsweise mit Hilfe einer Triangulation. Dazu werden meist Laserlichtquellen oder Leuchtdioden (LED) verwendet. Das entsprechende Verfahren wird auch Laserautofokus- bzw. LED-Autofokusverfahren genannt. Jedoch ist auch hierzu eine aufwendige Kollimations- und Abbildungsoptik nötig. Zudem wird bei par-axialer Abbildung meist zur Detektion und Auswertung eine zweite Optik benötigt. Die gegenseitige Ausrichtung dieser zwei Optiken beeinflusst die Präzision der Fokussierung. Um die Abbildung des Objektes für den Betrachter nicht zu beeinträchtigen, werden in der Regel Wellenlängen jenseits des sichtbaren Spektrums, üblicherweise im IR- (Infrarot-)Band, verwendet. Die überwiegende Mehrheit der Mikroskope ist hingegen für die Anwendung im sichtbaren Wellenlängenbereich konzipiert. Dabei wird beispielsweise eine chromatische Korrektion mit Hilfe eines Apochromats durchgeführt. Bei den bekannten Verfahren führt dies zu einem Farblängsfehler der Abbildung für den IR-Hilfsstrahl, welcher sich wiederum in einem "Offset" zur vom Betrachter empfundenen Fokusposition äußert. Durch "Vorhalt" kann dieser Offset korrigiert werden. Dies gestaltet sich jedoch bei einem modularen Aufbau bzw. bei einem kontinuierlichen Zoom-System aufwendig und kann zu einer Fehlbedienung bzw. einer Fehlfunktion führen. Durch die wellenlängenabhängige Eindringtiefe, insbesondere bei Halbleitern, entsteht ein objektabhängiger Offset, der nicht bzw. nur für jeweils eine Objektart korrigiert werden kann.

Die Zuverlässigkeit aller aktiven Autofokussysteme hängt von den Reflexionseigenschaften des zu untersuchenden Objektes ab. Dadurch können insbesondere bei einer paraxialen Projektion erhebliche Unterschiede zwischen der Abbildung des Objektes und des projizierten Hilfsstrahls bzw. der projizierten Hilfsstruktur auftreten. Dies führt zu Abweichungen bei der Fokussierung und im Extremfall zum völligen Versagen.

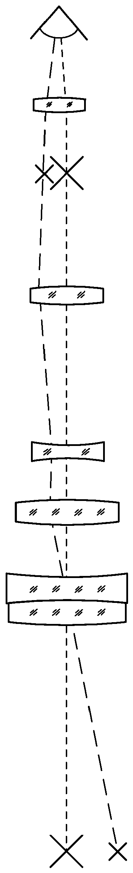

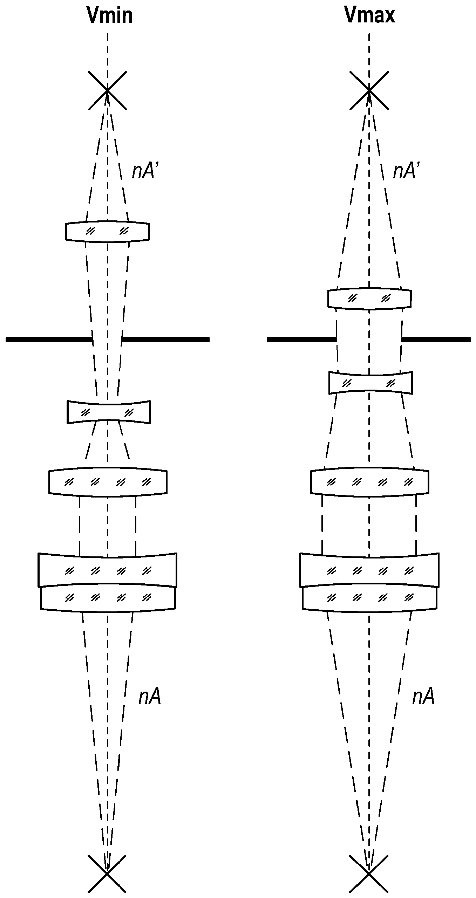

Figuren 5 bis 7 zeigen verschiedene Ausführungen eines Mikroskops gemäß dem Stand der Technik. In Figur 5 ist eine Ausführung eines Mikroskops mit digitaler Bildaufnahme ohne Autofokussystem gezeigt. In Figur 6 ist eine Ausführung eines Mikroskops mit visueller Betrachtung ohne Autofokussystem gezeigt. In Figur 7 ist eine Ausführung eines Mikroskops mit bildseitig konstanter numerischer Apertur und somit über den Abbildungsmaßstab in axialer Richtung konstantem Abstand zwischen einem ersten und einem zweiten Bildsensor gezeigt.

Das Dokument DE 28 36 428 A1 offenbart ein Verfahren und eine Vorrichtung zur automatischen Scharfeinstellung von Objektiven unter Verwendung von lichtempfindlichen, ladungsgekoppelten Elementen (CCD). Insbesondere offenbart das Dokument DE 28 36 428 A1 ein auf einer elektrischen Kontrastmessung beruhendes Verfahren zur automatischen Scharfeinstellung in optischen Geräten, wie Kameras, Mikroskopen und dergleichen.

US 6 128 129 offenbart ein Mikroskop mit einem Autofokussystem. Das Autofokussystem umfasst einen Strahlteiler, der ausgebildet ist, einen ersten ausgekoppelten Strahlengang und einen zweiten ausgekoppelten Strahlengang zu erzeugen. In dem ersten ausgekoppelten Strahlengang ist ein oberer Teil eines Bildsensors angeordnet, und in dem zweiten ausgekoppelten Strahlengang ist ein unterer Teil des Bildsensors angeordnet. Das Autofokussystem ist ausgebildet, Kontrastwerte eines von dem oberen Teil des Bildsensors aufgenommenen ersten Bildes und eines von dem unteren Teil des Bildsensors aufgenommenen zweiten Bildes zu ermitteln. Auf Grundlage der ermittelten Kontrastwerte wird ein Mikroskoptisch verfahren, um eine Lage einer Schärfeebene zur Objektebene einzustellen. Das Verfahren des Mikroskoptisches kann dabei in einem Grobfokussiermodus oder einem Feinfokussiermodus erfolgen.

US 2008/099661 A1 offenbart ein Verfahren zur Hochgeschwindigkeitsdigitalisierung von Probenträgern mittels eines Mikroskops mit einer Autofokusvorrichtung. Diese bekannte Autofokusvorrichtung hat drei Bildsensoren.

Ausgehend von dem bekannten Stand der Technik ist es Aufgabe der Erfindung, ein Mikroskop mit einem Autofokussystem anzugeben, das eine hohe Präzision, große Schnelligkeit und verbesserte Robustheit der Fokussierung ermöglicht.

Diese Aufgabe wird durch ein Mikroskop mit den Merkmalen des Anspruchs 1 gelöst. Vorteilhafte Weiterbildungen sind in den abhängigen Ansprüchen angegeben.

Durch ein Mikroskop mit den Merkmalen des Anspruchs 1 wird die vorteilhafte Fokussierung erreicht, da insbesondere das Autofokussystem ausgebildet ist, um basierend auf Kontrastwerten des von dem ersten Bildsensor aufgenommenen ersten Bildes und des von dem zweiten Bildsensor aufgenommenen zweiten Bildes eine Kontrastdifferenz zu ermitteln, und basierend auf der ermittelten Kontrastdifferenz eine relative Lage der Schärfeebene zur Objektebene einzustellen. Dabei umfassen das erste und zweite Bild jeweils von dem jeweils als Flächensensor ausgebildeten ersten und zweiten Bildsensor bereitgestellte Bildinformationen. Somit kann die Fokussierung flexibel bzw. ohne signifikante Einschränkungen durchgeführt werden. Ferner wird die Fokussierung relativ schnell und präzise erreicht. Dies ermöglicht die hohe Präzision, große Schnelligkeit und verbesserte Robustheit der Fokussierung.

Anstatt von zwei oder mehreren Bildsensoren, kann auch nur ein Bildsensor eingesetzt werden. Dessen Fläche wird dann in wenigstens zwei Teilbereiche unterteilt. Dieser eine Bildsensor kann beispielsweise in Kombination mit zwei Strahlteilern benutzt werden. In einer alternativen Ausführungsform können die zwei Teilbereiche des Bildsensors auch durch ein Linsen-Array in nur einem Strahlengang erzeugt werden.

Die hier erläuterten Elemente und ihre Funktionen beziehen sich auf die Verwendung von zwei oder mehreren Bildsensoren. Ferner können sich diese Elemente und ihre Funktionen auch entsprechend auf die Verwendung von nur einem Bildsensor mit zwei Teilbereichen beziehen. Dabei entspricht das in einem ersten Teilbereich auf dem einen Bildsensor erzeugbare erste Bild im Wesentlichen dem von einem ersten der zwei oder mehreren Bildsensoren aufgenommenen ersten Bild, während das in einem zweiten Teilbereich auf dem einen Bildsensor erzeugbare zweite Bild im Wesentlichen dem von einem zweiten der zwei oder mehreren Bildsensoren aufgenommenen zweiten Bild entspricht.

Das Autofokussystem ist derart ausgebildet, dass der Fokussierungsvorgang anhand eines ersten Betriebsmodus und eines zweiten Betriebsmodus ausführbar ist.

Dabei ist das Autofokussystem derart eingerichtet, dass es in dem ersten Betriebsmodus Kontrastwerte des von dem ersten Bildsensor aufgenommenen ersten Bildes und des von dem zweiten Bildsensor aufgenommenen zweiten Bildes und in dem zweiten Betriebsmodus Kontrastwerte des von dem ersten Bildsensor aufgenommenen ersten Bildes und des von dem zweiten Bildsensor aufgenommenen zweiten Bildes ermittelt, und basierend auf den ermittelten Kontrastwerten eine relative Lage der Schärfeebene zur Objektebene einstellt. Ferner ist das Autofokussystem ausgebildet, um die relative Lage der Schärfeebene zur Objektebene in dem ersten Betriebsmodus so einzustellen, dass die Schärfeebene innerhalb eines ersten Toleranzbereichs um die Objektebene liegt und die relative Lage der Schärfeebene zur Objektebene in dem zweiten Betriebsmodus so einzustellen, dass die Schärfeebene innerhalb eines zweiten Toleranzbereichs um die Objektebene liegt. Dabei ist der zweite Toleranzbereich kleiner als der erste Toleranzbereich. Ferner wird in dem ersten Betriebsmodus eine vergleichsweise grobe Fokussierung erreicht, während in dem zweiten Betriebsmodus eine vergleichsweise feine Fokussierung erreicht wird. Dabei kann die vergleichsweise grobe Fokussierung in dem ersten Betriebsmodus relativ schnell durchgeführt werden. Ferner kann die vergleichsweise feine Fokussierung in dem zweiten Betriebsmodus relativ präzise durchgeführt werden.

Ferner ist es vorteilhaft, wenn das Autofokussystem ausgebildet ist, um eine Richtungserkennung für die Einstellung der relativen Lage der Schärfeebene zur Objektebene basierend auf einem Vergleich eines ersten Kontrastwerts des von dem ersten Bildsensor aufgenommenen ersten Bildes und eines zweiten Kontrastwerts des von dem zweiten Bildsensor aufgenommenen zweiten Bildes durchzuführen. Somit liefert der erfindungsgemäße Algorithmus nicht nur die Distanz, entlang welcher das Präparat verfahren werden soll, sondern auch in welche Richtung dasselbe verfahren werden soll. Ferner kann eine Defokussierung mit Hilfe der Kontrastauswertung festgestellt und quantifiziert werden.

Dabei ist das Autofokussystem ausgebildet, um basierend auf der Richtungserkennung die relative Lage der Schärfeebene zur Objektebene derart einzustellen, dass die Schärfeebene in Richtung der Objektebene oder die Objektebene in Richtung der Schärfeebene verschoben wird, so dass sich der Abstand zwischen der Schärfeebene und der Objektebene verringert, wenn der erste Kontrastwert des von dem ersten Bildsensor aufgenommenen ersten Bildes größer als der zweite Kontrastwert des von dem zweiten Bildsensor aufgenommenen zweiten Bildes ist.

Ferner ist das Autofokussystem ausgebildet, um basierend auf der Richtungserkennung die relative Lage der Schärfeebene zur Objektebene derart einzustellen, dass die Schärfeebene von der Objektebene weg oder die Objektebene von der Schärfeebene weg verschoben wird, so dass sich der Abstand zwischen der Schärfeebene und der Objektebene vergrößert, wenn der zweite Kontrastwert des von dem zweiten Bildsensor aufgenommenen zweiten Bildes größer als der erste Kontrastwert des von dem ersten Bildsensor aufgenommenen ersten Bildes ist.

Ferner ist es vorteilhaft, wenn das Mikroskop durch ein Abbildungssystem mit einemdritten Bildsensor, einem Objektiv, einem ersten Strahlteiler und einem zweiten Strahlteiler gekennzeichnet ist, wobei der erste Strahlteiler in einem Strahlengang zwischen dem Objektiv und dem dritten Bildsensor und in einem Strahlengang zwischen dem Objektiv und dem ersten Bildsensor angeordnet ist, und wobei der zweite Strahlteiler in einem Strahlengang zwischen dem Objektiv und dem dritten Bildsensor und in einem Strahlengang zwischen dem Objektiv und dem zweiten Bildsensor angeordnet ist. Dadurch können aus dem Strahlengang zwischen dem Objektiv und dem dritten Bildsensor der erste ausgekoppelte Strahlengang und der zweite ausgekoppelte Strahlengang für das Autofokussystem ausgekoppelt werden.

Optional kann anstelle des dritten Bildsensors auch ein Okular in dem Abbildungssystem des Mikroskops vorgesehen sein. Ferner kann das erfindungsgemäße Autofokussystem auch in ein klassisches Mikroskop eingebaut sein.

Vorzugsweise ist der erste Strahlteiler ausgebildet ist, um die zur Objektebene konjugierte erste Bildebene zu erzeugen, während der zweite Strahlteiler ausgebildet ist, um die zur Objektebene konjugierte zweite Bildebene zu erzeugen.

Ferner ist es vorteilhaft, wenn der erste Strahlteiler und der zweite Strahlteiler in dem Strahlengang zwischen dem Objektiv und dem dritten Bildsensor beabstandet voneinander angeordnet sind, wenn die zur Objektebene konjugierte erste Bildebene und die zur Objektebene konjugierte zweite Bildebene in einem Abstand voneinander liegen, und wenn der Abstand zwischen der zur Objektebene konjugierten ersten Bildebene und der zur Objektebene konjugierten zweiten Bildebene dem Abstand zwischen dem ersten Strahlteiler und dem zweiten Strahlteiler entspricht. Dadurch können der erste Bildsensor in dem ersten ausgekoppelten Strahlengang und der zweite Bildsensor in dem zweiten ausgekoppelten Strahlengang zwischen der zur Objektebene konjugierten ersten Bildebene und der zur Objektebene konjugierten, zweiten Bildebene angeordnet werden. Vorzugsweise liegen dabei der in dem ersten ausgekoppelten Strahlengang angeordnete erste Bildsensor und der in dem zweiten ausgekoppelten Strahlengang angeordnete zweite Bildsensor in einer gleichen Ebene, die zu der zur Objektebene konjugierten ersten Bildebene und zu der zur Objektebene konjugierten zweiten Bildebene den gleichen Abstand hat.

Vorzugsweise ist der zweite Toleranzbereich kleiner oder gleich der Hälfte des ersten Toleranzbereichs.

Vorzugsweise entspricht der erste Toleranzbereich mindestens dem 2,5-fachen der Schärfentiefe des Mikroskops, während der zweite Toleranzbereich höchstens der Schärfentiefe des Mikroskops entspricht. Dadurch kann insbesondere die vergleichsweise feine Fokussierung mit einer hohen Präzision erreicht werden.

Ferner ist es vorteilhaft, wenn der Bildsensor ein Flächensensor ist. Dadurch kann ein Mikroskop mit digitaler Bildgebung mit einer verbesserten Kontrastauswertung realisiert werden.

Ferner ist es vorteilhaft, wenn der Benutzer auf dem Bildsensor einen Teilbereich (ROI = Region of Interest) auswählen kann, auf welchem die Fokusberechnung ausführbar ist. Dies ermöglicht die Bestimmung, auf welcher Höhe des Objekts fokussiert werden soll.

Das Autofokussystem ist derart ausgebildet, dass der anhand des ersten Betriebsmodus ausführbare Fokussierungsvorgang nur ein einziges Mal durchgeführt wird, und der anhand des zweiten Betriebsmodus ausführbare Fokussierungsvorgang so oft wiederholt wird, bis eine vorgegebene Abbruchbedingung erfüllt ist. Somit kann eine fortlaufende Fokussierung mit einer vorgegebenen Abbruchbedingung realisiert werden.

Ferner ist es vorteilhaft, wenn das Autofokussystem ausgebildet ist, um die relative Lage der Schärfeebene zur Objektebene in dem zweiten Betriebsmodus so einzustellen, dass der Abstand zwischen der Schärfeebene und der Objektebene um einen basierend auf der Kontrastdifferenz ermittelten Offset verringert wird. Dadurch kann die vergleichsweise feine Fokussierung relativ präzise und weitestgehend unabhängig von der Objektbeschaffenheit erreicht werden.

Ferner ist es vorteilhaft, wenn das Autofokussystem ausgebildet ist, um während der Bildaufnahmezeit für die Aufnahme des von dem ersten Bildsensor aufgenommenen ersten Bildes und des von dem zweiten Bildsensor aufgenommenen zweiten Bildes eine relative Lage der Schärfeebene zur Objektebene mit einer Fokus-Verfahrgeschwindigkeit zu verstellen. Dabei ist die Fokus-Verfahrgeschwindigkeit gleich dem Verhältnis der Schrittweite zur Bildaufnahmezeit. Ferner ist die Schrittweite größer als die Schärfentiefe des Mikroskops. Dadurch kann eine Verkürzung des Zeitbedarfs für die Fokussierung erreicht werden, ohne dass es zu einer wesentlichen Bewegungsunschärfe wegen der Integration des von dem ersten Bildsensor aufgenommenen ersten Bildes bzw. des von dem zweiten Bildsensor aufgenommenen zweiten Bildes kommt.

Ferner ist es vorteilhaft, wenn die Schrittweite größer oder gleich dem 2,5-fachen der Schärfentiefe des Mikroskops ist. Vorzugsweise ist die Schrittweite kleiner oder gleich dem 10-fachen der Schärfentiefe des Mikroskops. Dadurch kann einerseits der Zeitbedarf für die Fokussierung erheblich verkürzt werden, und andererseits kann gleichzeitig eine Bewegungsunschärfe wegen der Bildintegration vermieden aber zumindest verringert werden.

Vorzugsweise ist die Fokus-Verfahrgeschwindigkeit konstant.

Gemäß einem weiteren Ausführungsbeispiel umfasst das Mikroskop ein Autofokussystem zum Ausführen eines Fokussierungsvorgangs mit einem in einem ausgekoppelten Strahlengang angeordneten Bildsensor zum Aufnehmen eines ersten Bildes und eines zweiten Bildes. Dabei ist in dem ausgekoppelten Strahlengang ein Linsen-Array angeordnet, durch welches das erste Bild in einem ersten Teilbereich auf dem einen Bildsensor und das zweite Bild in einem zweiten Teilbereich auf dem einen Bildsensor erzeugbar sind. Ferner ist das Autofokussystem ausgebildet, um während der Bildaufnahmezeit für die Aufnahme des von dem Bildsensor aufgenommenen ersten Bildes und des zweiten Bildes eine relative Lage der Schärfeebene zur Objektebene mit einer Fokus-Verfahrgeschwindigkeit zu verstellen. Dabei ist die Fokus-Verfahrgeschwindigkeit gleich dem Verhältnis einer Schrittweite zur Bildaufnahmezeit. Ferner ist die Schrittweite größer als die Schärfentiefe des Mikroskops.

Weitere Merkmale und Vorteile der Erfindung ergeben sich aus der nachfolgenden Beschreibung, die die Erfindung anhand von Ausführungsbeispielen im Zusammenhang mit den beigefügten Figuren näher erläutert. Es zeigen:

Fig. 1a    eine schematische Darstellung eines erfindungsgemäßen Mikroskops mit einem Autofokussystem zur Einstellung der relativen Lage der Schärfeebene zur Objektebene;

Fig. 1b    eine schematische Darstellung des erfindungsgemäßen Mikroskops mit dem Autofokussystem nach Figur 1a zur Einstellung der Schärfeebene innerhalb eines ersten Toleranzbereichs und eines zweiten, kleineren Toleranzbereichs um die Objektebene;

Fig. 2    ein Flussdiagramm eines Verfahrens zum Durchführen einer vergleichsweisen groben Fokussierung in einem ersten Betriebsmodus des erfindungsgemäßen Mikroskops;

Fig. 3    ein Flussdiagramm eines Verfahrens zum Durchführen einer vergleichsweise feinen Fokussierung in einem zweiten Betriebsmodus des erfindungsgemäßen Mikroskops;

Fig. 4a    ein Flussdiagramm eines Verfahrens zum Durchführen einer einmaligen Fokussierung gemäß einem Ausführungsbeispiel der vorliegenden Erfindung;

Fig. 4b    ein Flussdiagramm eines Verfahrens zum Durchführen einer fortlaufenden Fokussierung gemäß einem weiteren Ausführungsbeispiel der vorliegenden Erfindung;

Fig. 5    eine beispielhafte Ausführung eines Mikroskops mit digitaler Bildaufnahme ohne Autofokussystem gemäß dem Stand der Technik;

Fig. 6    eine beispielhafte Ausführung eines Mikroskops mit visueller Betrachtung ohne Autofokussystem gemäß dem Stand der Technik; und

Fig. 7    eine beispielhafte Ausführung eines Mikroskops mit bildseitig konstanter numerischer Apertur und somit über den Abbildungsmaßstab in axialer Richtung konstantem Abstand zwischen dem ersten und dem zweiten Bildsensor gemäß dem Stand der Technik.

Ein erster Aspekt der vorliegenden Erfindung befasst sich mit dem Nachteil, dass die Fokussierung bei bekannten Autofokussystemen nicht effektiv genug ist.

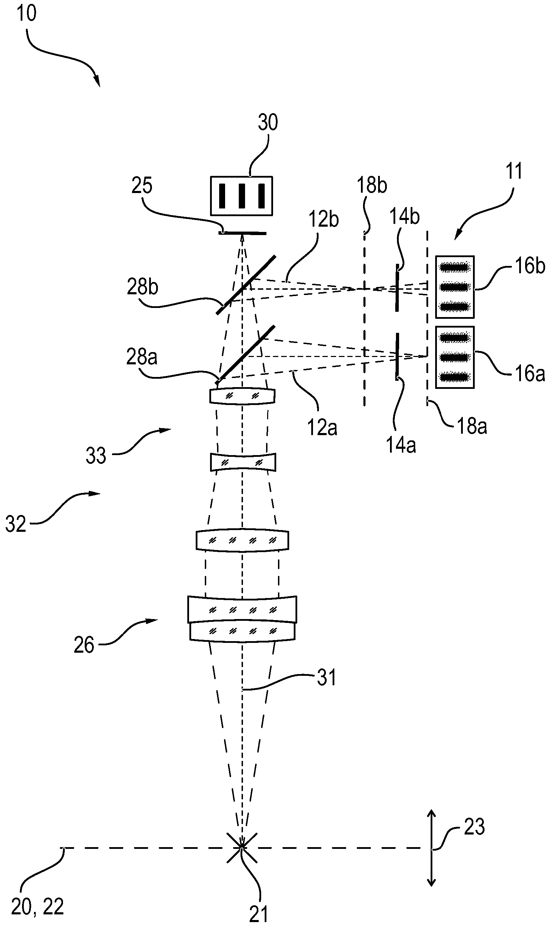

Figur 1a zeigt eine schematische Darstellung eines erfindungsgemäßen Mikroskops 10 mit einem Autofokussystem 11 zur Einstellung der relativen Lage der Schärfeebene 20 zur Objektebene 22. Wie in Figur 1a gezeigt, umfasst das Autofokussystem 11 einen in einem ersten ausgekoppelten Strahlengang 12a angeordneten ersten Bildsensor 14a zum Aufnehmen eines ersten Bildes 16a und einen in einem zweiten ausgekoppelten Strahlengang 12b angeordneten zweiten Bildsensor 14b zum Aufnehmen eines zweiten Bildes 16b. Insbesondere ist in Figur 1a gezeigt, dass dem ersten Bildsensor 14a eine zur Objektebene 22 konjugierte erste Bildebene 18a zugeordnet ist und der erste Bildsensor 14a in dem ersten ausgekoppelten Strahlengang 12a lichtstromaufwärts der zur Objektebene 22 konjugierten ersten Bildebene 18a angeordnet ist. Ferner ist in Figur 1a gezeigt, dass dem zweiten Bildsensor 14b eine zur Objektebene 22 konjugierte zweite Bildebene 18b zugeordnet ist und der zweite Bildsensor 14b in dem zweiten ausgekoppelten Strahlengang 12b lichtstromabwärts der zur Objektebene 22 konjugierten zweiten Bildebene 18b angeordnet ist.

Das in Figur 1a gezeigte Mikroskop 10 ist gekennzeichnet durch ein Abbildungssystem 32 mit einem dritten Bildsensor 25, einem Objektiv 26, einem ersten Strahlteiler 28a und einem zweiten Strahlteiler 28b. Der erste Strahlteiler 28a ist in einem Strahlengang zwischen dem Objektiv 26 und dem dritten Bildsensor 25 und in einem Strahlengang zwischen dem Objektiv 26 und dem ersten Bildsensor 14a angeordnet. Ferner ist der zweite Strahlteiler 28b in einem Strahlengang zwischen dem Objektiv 26 und dem dritten Bildsensor 25 und in einem Strahlengang zwischen dem Objektiv 26 und dem zweiten Bildsensor 14b angeordnet. Der dritte Bildsensor 25 des in Figur 1a gezeigten Mikroskops 10 dient zum Aufnehmen eines dritten Bildes 30.

Wie in Figur 1a gezeigt, dient der erste Strahlteiler 28a zur Erzeugung der zur Objektebene 22 konjugierten ersten Bildebene 18a. Ferner dient der zweite Strahlteiler 28b zur Erzeugung der zur Objektebene 22 konjugierten zweiten Bildebene 18b. Dabei ist der erste Strahlteiler 28a derart angeordnet, dass der erste ausgekoppelte Strahlengang 12a aus dem Strahlengang zwischen dem Objektiv 26 und dem dritten Bildsensor 25 ausgekoppelt wird. Ferner ist der zweite Strahlteiler 28b derart angeordnet, dass der zweite ausgekoppelte Strahlengang 12b aus dem Strahlengang zwischen dem Objektiv 26 und dem dritten Bildsensor 25 ausgekoppelt wird.

Das Abbildungssystem 32 des in Figur 1a gezeigten Mikroskops 10 dient zur optischen Abbildung der Objektebene 22 auf die zur Objektebene 22 konjugierte erste Bildebene 18a bzw. auf die zur Objektebene 22 konjugierte zweite Bildebene 18b. Das Abbildungssystem 32 umfasst ein Zoomsystem 33, dessen Aufbau dem Fachmann bekannt ist und hier nicht näher beschrieben wird.

Bei dem erfindungsgemäßen Mikroskop 10 sind der erste Strahlteiler 28a und der zweite Strahlteiler 28b in dem Strahlengang zwischen dem Objektiv 26 und dem dritten Bildsensor 25 beabstandet voneinander angeordnet. Ferner liegen die zur Objektebene 22 konjugierte erste Bildebene 18a und die zur Objektebene 22 konjugierte zweite Bildebene 18b in einem Abstand voneinander. Dabei entspricht der Abstand zwischen der zur Objektebene 22 konjugierten ersten Bildebene 18a und der zur Objektebene 22 konjugierten zweiten Bildebene 18b dem Abstand zwischen dem ersten Strahlteiler 28a und dem zweiten Strahlteiler 28b. Wie in Figur 1a gezeigt, sind der erste Bildsensor 14a und der zweite Bildsensor 14b zwischen der zur Objektebene 22 konjugierten ersten Bildebene 18a und der zur Objektebene 22 konjugierten zweiten Bildebene 18b angeordnet. Vorzugsweise haben der erste Bildsensor 14a und der zweite Bildsensor 14b jeweils einen gleichen Abstand zu der zur Objektebene 22 konjugierten ersten Bildebene 18a und zu der zur Objektebene 22 konjugierten zweiten Bildebene 18b.

Das Autofokussystem 11 des in Figur 1a gezeigten Mikroskops 10 dient zur Einstellung der relativen Lage der Schärfeebene 20 zur Objektebene 22. Dies ist in Figur 1a durch den Pfeil 23 schematisch dargestellt. Die Schärfeebene 20 verläuft durch den Fokus 21 des Objektivs 26 des Abbildungssystems 32. Ferner liegt die Schärfeebene 20 senkrecht zur optischen Achse des Strahlengangs zwischen dem Fokus 21 und dem dritten Bildsensor 25.

In Figur 1a ist der perfekt fokussierte Zustand des Mikroskops 10 schematisch dargestellt. Dabei liegt die Schärfeebene 20 genau in der Objektebene 22. Die Einstellung des fokussierten Zustands wird durch eine Verschiebung der Schärfeebene 20 in Richtung der Objektebene 22 bzw. durch eine Verschiebung der Objektebene 22 in Richtung der Schärfeebene 20 erreicht. Die Verschiebung erfolgt dabei parallel zur optischen Achse 31 des Strahlengangs. In einer weiteren Ausführungsform kann die relative Verschiebung der Objektebene 22 und der Schärfeebene 20 unter bekanntem Winkel zwischen der optischen Achse 31 und der Objektebene erfolgen. Dabei durchdringt die optische Achse 31 im fokussierten Zustand vorzugsweise das Zentrum der Objektebene.

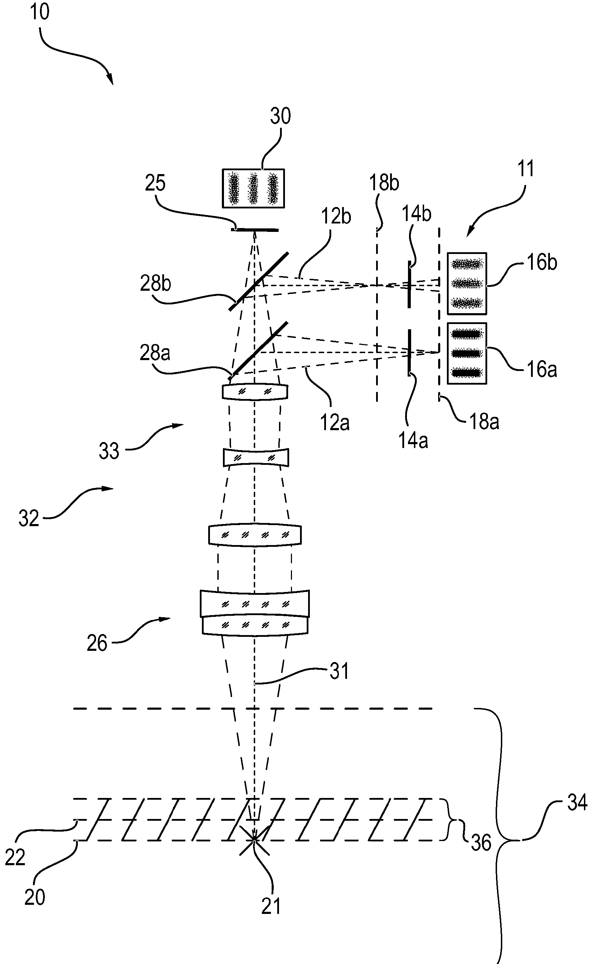

Figur 1b zeigt eine schematische Darstellung des erfindungsgemäßen Mikroskops 10 mit dem Autofokussystem 11 nach Figur 1a zur Einstellung der Schärfeebene 20 innerhalb eines ersten Toleranzbereichs 34 und eines zweiten, kleineren Toleranzbereichs 36 um die Objektebene 22. In Figur 1b ist der nicht perfekt fokussierte Zustand, d.h., der innerhalb eines Toleranzbereichs fokussierte Zustand, des Mikroskops 10 schematisch dargestellt. Dabei liegt die Schärfeebene 20 nicht genau in der Objektebene 22. Stattdessen liegt die Schärfeebene 20 innerhalb des ersten Toleranzbereichs 34 bzw. innerhalb des zweiten, kleineren Toleranzbereichs 36 um die Objektebene 22.

Vorzugsweise entspricht der erste Toleranzbereich 34 mindestens dem 2,5-fachen der Schärfentiefe des Mikroskops 10, während der zweite Toleranzbereich 36 höchstens der Schärfentiefe des Mikroskops 10 entspricht. Mit anderen Worten, Figur 1b zeigt den fokussierten Zustand des Mikroskops 10 innerhalb eines in etwa in der Schärfentiefe liegenden Toleranzbereichs. Die Einstellung dieses in Figur 1b gezeigten fokussierten Zustands erfolgt durch eine Verschiebung der Schärfeebene 20 in Richtung der Objektebene 22. Dabei wird die Schärfeebene 20 zunächst von einem außerhalb des ersten Toleranzbereichs 34 liegenden Bereich in den ersten Toleranzbereich 34 verschoben. Danach wird die Schärfeebene 20 von dem ersten Toleranzbereich 34 in den zweiten, kleineren Toleranzbereich 36 verschoben. Somit wird zunächst eine vergleichsweise grobe Fokussierung und danach eine vergleichsweise feine Fokussierung erreicht.

Alternativ kann bei dem in Figur 1b gezeigten Mikroskop 10 auch die Objektebene 22 in Richtung der Schärfeebene 20 verschoben werden, um die vergleichsweise grobe Fokussierung bzw. die vergleichsweise feine Fokussierung zu erreichen.

Ferner dient das Autofokussystem 11 zur Auswertung der Bildanalysedaten, wie beispielsweise Kontrastwerte des von dem ersten Bildsensor 14a aufgenommenen ersten Bildes 16a und des von dem zweiten Bildsensor 14b aufgenommenen zweiten Bildes 16b. Basierend auf dieser Auswertung der Bildanalysedaten bzw. Kontrastwerte wird die relative Lage der Schärfeebene 20 zur Objektebene 22 eingestellt.

Bezugnehmend auf Figur 1b erfolgt die Einstellung der relativen Lage der Schärfeebene 20 zur Objektebene 22 mit dem Autofokussystem 11 derart, dass die Schärfeebene 20 in Richtung der Objektebene 22 oder die Objektebene 22 in Richtung der Schärfeebene 20 verschoben wird, wenn ein erster Kontrastwert des von dem ersten Bildsensor 14a aufgenommenen ersten Bildes 16a größer als ein zweiter Kontrastwert des von dem zweiten Bildsensor 14b aufgenommenen zweiten Bildes 16b ist.

Vorzugsweise sind der erste Bildsensor 14a und der zweite Bildsensor 14b jeweils digitale Bildsensoren mit einer zweidimensionalen Anordnung von Pixeln. Insbesondere sind die Sensoren dem Fachmann auch als Flächensensoren bekannt. Die Flächensensoren entsprechen zweckmässigerweise in etwa dem Bildfeld, da dann eine selektive Fokussierung auf alle verschiedenen Objektbereiche durchgeführt werden kann.

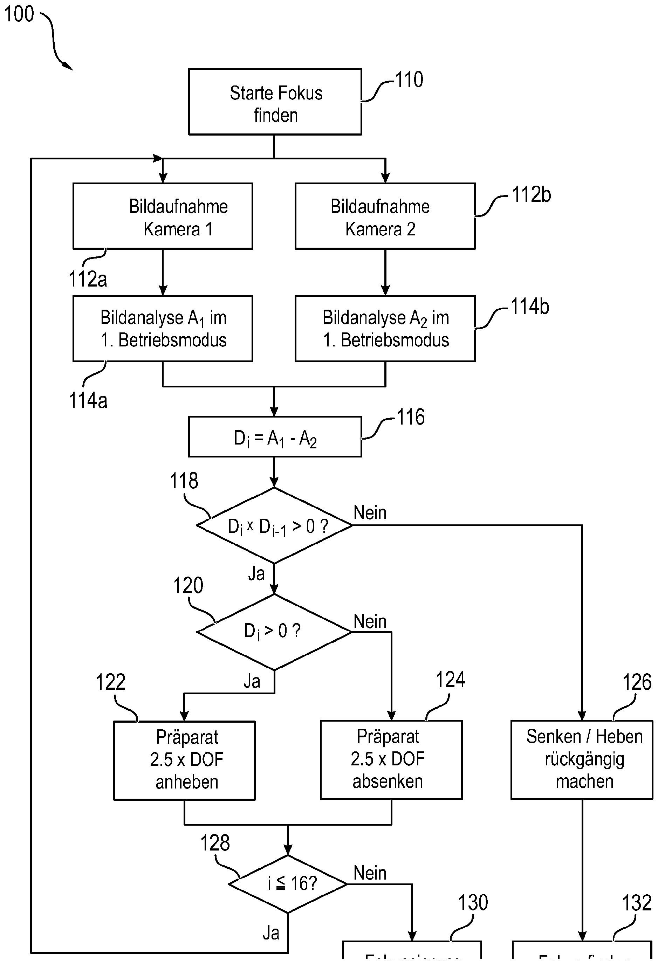

Figur 2 zeigt ein Flussdiagramm eines Verfahrens 100 zum Durchführen einer vergleichsweise groben Fokussierung in einem ersten Betriebsmodus des erfindungsgemäßen Mikroskops 10. Das in Figur 2 gezeigte Verfahren 100 wird dazu verwendet, um die relative Lage der Schärfeebene 20 zur Objektebene 22 in dem ersten Betriebsmodus so einzustellen, dass die Schärfeebene 20 innerhalb des ersten Toleranzbereichs 34 um die Objektebene 22 liegt.

Das Verfahren 100 umfasst einen mit "Starte Fokus finden" bezeichneten Schritt 110. Dieser Schritt 110 stellt den Beginn des Verfahrens 100 zum Durchführen der vergleichsweise groben Fokussierung dar. Ferner umfasst das Verfahren 100 die mit "Bildaufnahme Kamera 1" und "Bildaufnahme Kamera 2" bezeichneten Schritte 112a, 112b. Während des Schritts 112a wird das erste Bild 16a von dem ersten Bildsensor 14a aufgenommen. Während des Schritts 112b wird das zweite Bild 16b von dem zweiten Bildsensor 14b aufgenommen. Ferner umfasst das Verfahren 100 jeweils die mit "Bildanalyse $A_1$ für 1. Betriebsmodus" bzw. "Bildanalyse $A_2$ für 1. Betriebsmodus" bezeichneten Schritte 114a, 114b. Während des Schritts 114a wird eine erste Bildanalyse $A_1$ anhand des von dem ersten Bildsensor 14a aufgenommenen ersten Bildes 16a durchgeführt. Während des Schritts 114b wird ähnlich eine Bildanalyse $A_2$ anhand des von dem zweiten Bildsensor 14b aufgenommenen zweiten Bildes 16b durchgeführt. Ferner umfasst das Verfahren 100 einen Schritt 116 zur Auswertung der während der Schritte 114a, 114b ermittelten Bildanalysedaten, wie beispielsweise Kontrastwerte. Insbesondere wird im Schritt 116 die Differenz, $D_i$, der Bildanalysedaten

$$D_i = A_1 - A_2$$

berechnet, wobei $D_i$ die Differenz der Bildanalysedaten (wie beispielsweise Kontrastwertdifferenz), $A_1$ die aus Schritt 114a ermittelten ersten Bildanalysedaten (wie beispielsweise erster Kontrastwert) und $A_2$ die aus Schritt 114b ermittelten zweiten Bildanalysedaten (wie beispielsweise Kontrastwert) sind. Dabei ist i ein ganzzahliger Index, der die i-te Iteration des iterativ durchführbaren Verfahrens 100 angibt.

Ferner umfasst das Verfahren 100 einen Schritt 118 zum Vergleich der Bildanalysedifferenzen (wie beispielsweise Kontrastwertdifferenzen) unter Verwendung der Gleichung

$$D_i * D_{i-1} > 0$$

wobei $D_i$ die während der aktuellen Iteration des Verfahrens 100 ermittelte Differenz der Bildanalysedaten (Kontrastwertdifferenz) und $D_{i-1}$ die während der vorherigen Iteration des Verfahrens 100 ermittelte Differenz der Bildanalysedaten (wie beispielsweise Kontrastwertdifferenz) sind. Ferner umfasst das Verfahren 100 einen Schritt 120 zur Auswertung der während des Schritts 116 ermittelten Kontrastwertdifferenz. Dabei wird der Schritt 120 durchgeführt, wenn der während des Schritts 118 durchgeführte Vergleich positiv ist, d.h., wenn die Bedingung gemäß der obigen Gleichung erfüllt ist. Während des Schritts 120 wird überprüft, ob die folgende Bedingung

$$D_i > 0$$

erfüllt ist. Ferner umfasst das Verfahren 100 einen mit "Präparat 2,5 x DOF anheben" (DOF, depth of field) bezeichneten Schritt 122 und einen mit "Präparat 2,5 x DOF absenken" bezeichneten Schritt 124. Dabei wird der Schritt 122 durchgeführt, wenn die während des Schritts 120 geprüfte Bedingung erfüllt ist, während der Schritt 124 durchgeführt wird, wenn die während des Schritts 120 geprüfte Bedingung nicht erfüllt ist. Während des Schritts 122 wird das Präparat um das 2,5-fache der Schärfentiefe angehoben. Während des Schritts 124 wird das Präparat um das 2,5-fache der Schärfentiefe abgesenkt. Dabei befindet sich das zu untersuchende Präparat im Wesentlichen in der in Figur 1a und 1b gezeigten Objektebene 22. Ferner umfasst das Verfahren einen Schritt 128 zur Beurteilung des Abbruchs oder der wiederholten Durchführung des Verfahrens 100. Während des Schritts 128 wird überprüft, ob die folgende Bedingung

$$i <= X$$

erfüllt ist, wobei X die Obergrenze der Anzahl der Iterationen darstellt. Die Obergrenze X kann beispielsweise auf 30 oder weniger, vorzugsweise zwischen 15 und 20 festgelegt sein. Ferner umfasst das Verfahren 100 einen mit "Fokussierung fehlgeschlagen" bezeichneten Block 130. Dabei gibt der Block 130 an, dass die während des Schritts 128 geprüfte Bedingung nicht erfüllt ist, d.h., wenn bereits mehr als 16 Iterationen des Verfahrens 100 durchgeführt wurden. Andernfalls wird das Verfahren beginnend mit den Schritten 112a, 112b wiederholt durchgeführt.

Ferner umfasst das Verfahren 100 einen mit "Senken/Heben rückgängig machen" bezeichneten Schritt 126. Dabei wird der Schritt 126 durchgeführt, wenn der während des Schritts 118 durchgeführte Vergleich negativ ist, d.h., wenn sich die Differenz (z.B. Kontrastwertdifferenz) der aktuellen Iteration des Verfahrens 100 und die Differenz (z.B. Kontrastwertdifferenz) der vorherigen Iteration des Verfahrens 100 unterscheiden. Während des Schritts 126 wird das während des Schritts 122 durchgeführte Heben bzw. das während des Schritts 124 durchgeführte Senken des Präparats rückgängig gemacht. D.h., das Präparat wird jeweils um das 2,5-fache der Schärfentiefe abgesenkt bzw. angehoben. Ferner umfasst das Verfahren 100 einen mit "Fokus finden abgeschlossen" bezeichneten Block 132.

Der Block 130 stellt das Ende des Verfahrens 100 dar, wobei mit dem Verfahren 100 keine sinnvolle Fokussierung möglich ist. Der Block 132 stellt das Ende des Verfahrens 100 dar, wobei die Fokussierung erfolgreich durchgeführt wurde.

Das anhand von Figur 2 beschriebene Verfahren 100 zur Durchführung der vergleichsweise groben Fokussierung stellt ein Verfahren zum Finden des Fokus während eines automatischen Fokussierungsvorganges dar.

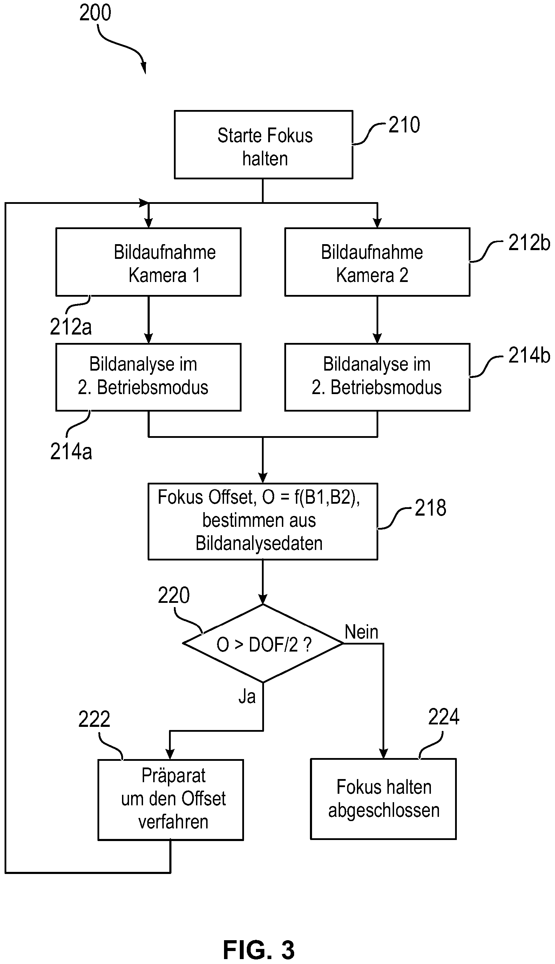

Figur 3 zeigt ein Flussdiagramm eines Verfahrens 200 zum Durchführen einer vergleichsweise feinen Fokussierung in einem zweiten Betriebsmodus des erfindungsgemäßen Mikroskops 10. Das in Figur 3 gezeigte Verfahren 200 kann dazu verwendet werden, um die relative Lage der Schärfeebene 20 zur Objektebene 22 in dem zweiten Betriebsmodus so einzustellen, dass die Schärfeebene 20 innerhalb des zweiten im Vergleich zum ersten Toleranzbereich 34 kleineren Toleranzbereichs 36 um die Objektebene 22 liegt.

Das Verfahren 200 umfasst einen mit "Starte Fokus halten" bezeichneten Schritt 210. Der Schritt 210 stellt den Beginn des Verfahrens 200 zur Durchführung der vergleichsweise feinen Fokussierung dar. Ferner umfasst das Verfahren 200 einen mit "Bildaufnahme Kamera 1" bezeichneten Schritt 212a und einen mit "Bildaufnahme Kamera 2" bezeichneten Schritt 212b. Während des Schritts 212a wird das erste Bild 16a von dem ersten Bildsensor 14a aufgenommen. Während des Schritts 212b wird das zweite Bild 16b von dem zweiten Bildsensor 14b aufgenommen. Ferner umfasst das Verfahren 200 jeweils einen mit "Bildanalyse im 2. Betriebsmodus" bezeichneten Schritt 214a, 214b. Während des Schritts 214a, 214b werden Bildanalysedaten, wie beispielsweise ein erster Kontrastwert B1 des von dem ersten Bildsensor 14a aufgenommenen ersten Bildes 16a ermittelt. Während des Schritts 214b werden weitere Bildanalysedaten, z.B. ein zweiter Kontrastwert B2 des von dem zweiten Bildsensor 14b aufgenommenen zweiten Bildes 16b ermittelt. Ferner umfasst das Verfahren 200 einen mit "Fokus Offset, O=f(B1, B2), bestimmen aus Bildanalysedaten" bezeichneten Schritt 218. Während des Schritts 218 wird ein Wert für die auch als Offset bezeichnete Verschiebung des Präparats unter Verwendung des folgenden funktionalen Zusammenhangs

$$O = f(B1, B2)$$

ermittelt, wobei O der Offset und B1 und B2 die Bildanalysewerte sind. Ferner umfasst das Verfahren 200 einen Schritt 220 zum Überprüfen der folgenden Bedingung

$$O > DOF/2$$

wobei O der Offset und DOF die Schärfentiefe des Mikroskops 10 sind. Ferner umfasst das Verfahren 200 einen mit "Präparat um den Offset verfahren" bezeichneten Schritt 222 und einen mit "Fokus halten abgeschlossen" bezeichneten Block 224. Dabei wird der Schritt 222 durchgeführt, wenn die während des Schritts 220 überprüfte Bedingung erfüllt ist. Während des Schritts 222 wird das Präparat um den während des Schritts 218 ermittelten Offset verfahren. Dabei liegt das zu untersuchende Präparat im Wesentlichen in der in Figur 1a und 1b gezeigten Objektebene 22. Nach der Durchführung des Schritts 222 wird das Verfahren 200 beginnend mit den Schritten 212a, 212b wiederholt durchgeführt. Wenn die während des Schritts 220 überprüfte Bedingung nicht erfüllt ist, folgt der Block 224. Der Block 224 stellt das Ende des Verfahrens 200 dar.

Das anhand von Figur 3 beschriebene Verfahren 200 zur Durchführung der vergleichsweise feinen Fokussierung stellt ein Verfahren zum Halten des Fokus während eines automatischen Fokussierungsvorgangs dar.

Bezugnehmend auf Figur 2 und 3 wird der automatische Vorgang zur Fokussierung in zwei verschiedene Phasen bzw. Verfahren 100, 200 aufgeteilt. Dabei wird das in Figur 2 gezeigte Verfahren 100 zum Finden des Fokus verwendet, während das in Figur 3 gezeigte Verfahren 200 zum Halten des Fokus verwendet wird. Beim Verfahren 100 zum Finden des Fokus ist ein großer Fangbereich vorrangig. Dabei ist der Fangbereich definiert als die größte Entfernung von der Fokusposition, bei der noch eine Richtungserkennung zum Anfahren der Fokusposition möglich ist. Beim Verfahren 200 zum Halten des Fokus ist die Präzision entscheidend, mit der die Fokusebene bestimmt werden kann. Die Präzision ist in diesem Zusammenhang definiert als die verbleibende Abweichung der angefahrenen Fokusposition zur idealen Fokusposition.

Es ist anzumerken, dass bei beiden Bildanalysen eine zweidimensionale Bildfläche bewertet wird. Dabei ist es vorteilhaft, dass die Kontrastauswertung bzw. Bildanalyse nicht nur entlang einer Linie erfolgt. Ferner wird die Kontrastauswertung auch nicht nur auf das nächste Nachbarpixel bezogen durchgeführt.

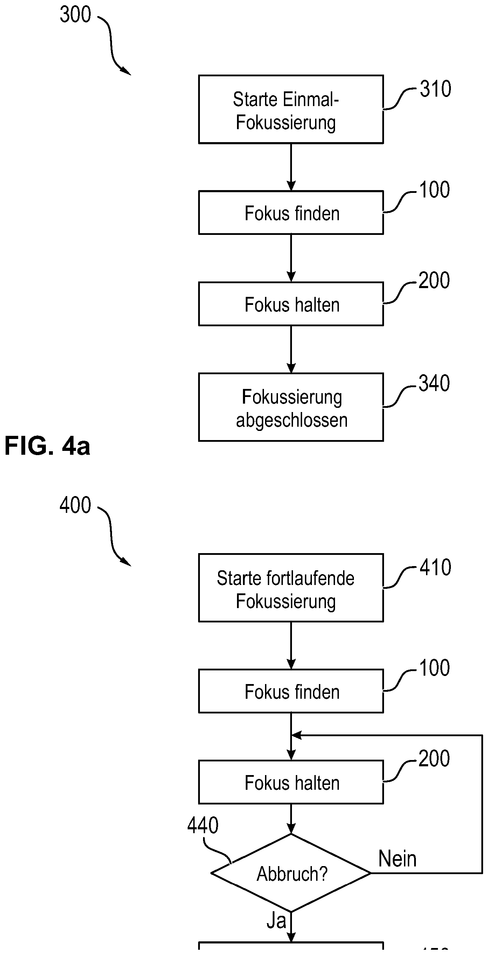

Figur 4a zeigt ein Flussdiagramm eines Verfahrens 300 zum Durchführen einer einmaligen Fokussierung gemäß einem Ausführungsbeispiel der vorliegenden Erfindung. Das Verfahren 300 umfasst den mit "Starte Einmal Fokussierung" bezeichneten Schritt 310, das mit "Fokus finden" bezeichnete Verfahren 100, das mit "Fokus halten" bezeichnete Verfahren 200 und einen mit "Fokussierung abgeschlossen" bezeichneten Block 340. Während des Schritts 310 wird eine einmalige Fokussierung mit dem Autofokussystem 11 des Mikroskops 10 begonnen. Danach wird das Verfahren 100 zum Finden des Fokus, wie anhand von Figur 2 beschrieben, durchgeführt. Danach wird das Verfahren 200 zum Halten des Fokus, wie anhand von Figur 3 beschrieben, durchgeführt. Der Block 340 stellt das Ende der Fokussierung dar. Bei dem in Figur 4a gezeigten Verfahren 300 zur Durchführung der einmaligen Fokussierung werden das Verfahren 100 zum Finden des Fokus und das Verfahren 200 zum Halten des Fokus jeweils nur ein einziges Mal durchgeführt.

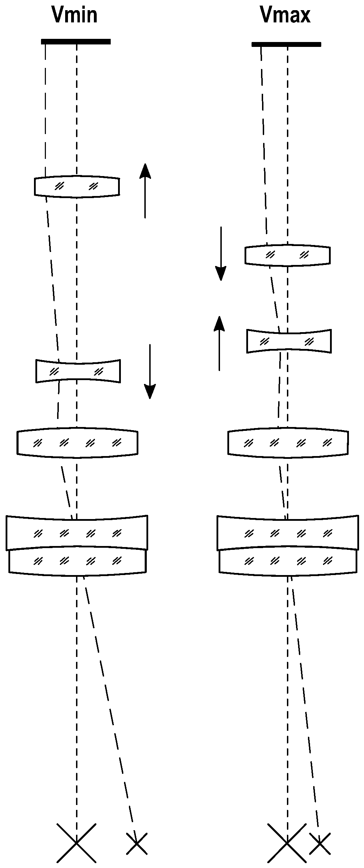

Figur 4b zeigt ein Flussdiagramm eines Verfahrens 400 zum Durchführen einer fortlaufenden Fokussierung gemäß einem weiteren Ausführungsbeispiel der vorliegenden Erfindung. Das Verfahren 400 umfasst den mit "Starte fortlaufende Fokussierung" bezeichneten Schritt 410, das Verfahren 100 zum Finden des Fokus, das Verfahren 200 zum Halten des Fokus, einen Schritt 440 zum Überprüfen einer Bedingung für einen Abbruch des Verfahrens und einen mit "Fokussierung beendet" bezeichneten Block 450. Während des Schritts 410 wird eine fortlaufende Fokussierung mit dem Autofokussystem 11 des Mikroskops 10 begonnen. Danach wird das Verfahren 100 zum Finden des Fokus durchgeführt. Danach wird das Verfahren 200 zum Halten des Fokus durchgeführt. Während des Schritts 440 wird überprüft, ob die Bedingung für den Abbruch des Verfahrens erfüllt ist. Dabei ist die Bedingung für den Abbruch des Verfahrens derart vorgegeben, dass sich die gewünschte Präzision der Fokussierung ergibt. Für den Fall, dass die während des Schritts 440 überprüfte Bedingung erfüllt ist, findet der Abbruch des Verfahrens statt, so dass die Fokussierung beendet ist. Andernfalls wird das Verfahren 200 zum Halten des Fokus und der Schritt 440 zum Überprüfen der Bedingung für den Abbruch wiederholt durchgeführt. Bei dem in Figur 4b gezeigten Verfahren 400 zur Durchführung der fortlaufenden Fokussierung wird das Verfahren 100 zum Finden des Fokus nur ein einziges Mal durchgeführt, während das Verfahren 200 zum Halten des Fokus so oft wiederholt wird, bis die vorgegebene Abbruchbedingung erfüllt ist.

Ein zweiter Aspekt der vorliegenden Erfindung befasst sich mit dem weiteren Nachteil, dass die Kontrastverläufe der von den Bildsensoren 14a, 14b aufgenommenen Bilder 16a, 16b für verschiedene zu untersuchende Objekte jeweils unterschiedlich sind.

Bei dem in Figur 3 gezeigten Verfahren 200 zur Durchführung der vergleichsweise feinen Fokussierung wird basierend auf Kontrastwerten des von dem ersten Bildsensor 14a aufgenommenen ersten Bildes 16a und des von dem zweiten Bildsensor 14b aufgenommenen zweiten Bildes 16b die Kontrastdifferenz ermittelt. Ferner wird basierend auf der ermittelten Kontrastdifferenz die relative Lage der Schärfeebene 20 zur Objektebene 22 eingestellt.

Ein weiterer Aspekt der vorliegenden Erfindung befasst sich mit dem weiteren Nachteil, dass es bei bekannten Autofokussystemen zu einer Bewegungsunschärfe wegen der Bildintegration kommt.

Vorzugsweise ist das Autofokussystem 11 des Mikroskops 10 derart ausgebildet, dass während der Bildaufnahmezeit für die Aufnahme des von dem ersten Bildsensor 14a aufgenommenen ersten Bildes 16a und des von dem zweiten Bildsensor 14b aufgenommenen zweiten Bildes 16b die relative Lage der Schärfeebene 20 zur Objektebene 22 mit einer bestimmten Schrittweite und einer bestimmten Fokus-Verfahrgeschwindigkeit eingestellt wird. Dabei ist die Fokus-Verfahrgeschwindigkeit gleich dem Verhältnis der Schrittweite zur Bildaufnahmezeit. Ferner ist die Schrittweite größer als die Schärfentiefe des Mikroskops 10. Vorzugsweise ist die maximale Fokus-Verfahrgeschwindigkeit, mit der die Fokussierung zuverlässig durchgeführt werden kann, durch die folgende Gleichung

$$ V = \frac{(DOF \cdot ST)}{AT} $$

gegeben, wobei v die maximale Fokus-Verfahrgeschwindigkeit, DOF die Schärfentiefe und AT die Bildaufnahmezeit ("Image Acquisition Time") sind, und wobei ST ein Vielfaches der Schärfentiefe angibt. Dabei entspricht das Produkt DOF · ST der Schrittweite während der Fokussierung.

Vorzugsweise ist die Schrittweite größer oder gleich dem 2,5-fachen der Schärfentiefe des Mikroskops 10. Dadurch kann der Zeitbedarf für die Fokussierung erheblich verkürzt werden.

Ferner kann bis zu einer Schrittweite gleich dem 10-fachen der Schärfentiefe des Mikroskops 10 eine zuverlässige Fokussierung durchgeführt werden.

Vorzugsweise wird die Einstellung der Fokussierung mit einer konstanten Fokus-Verfahrgeschwindigkeit durchgeführt. Zur Verkürzung des Zeitbedarfs für die Fokussierung kann somit auch während der Bildaufnahme die Fokusebene mit konstanter Geschwindigkeit weiter verfahren werden. Dies führt zwar zu einer gewissen Bewegungsunschärfe in den aufgenommenen Bildern. Es wurde jedoch erkannt, dass bis zu einer Verfahrstrecke von der 10-fachen Schärfentiefe pro Bildaufnahmezeit keine wesentliche Reduktion der Präzision festzustellen ist.

Gemäß der vorliegenden Erfindung wird ein Multisensor-Mikroskop zur automatischen Fokussierung realisiert. Dabei ist das Mikroskop ausgestattet mit mehreren Bildsensoren zur Erfassung der flächenausgedehnten Helligkeits- und Farbinformation eines Bildes des Objekts zur automatischen Fokussierung auf die Oberfläche des Objektes. Ferner wird gemäß der vorliegenden Erfindung ein entsprechendes Verfahren zur schnellen, präzisen und verlässlichen Fokussierung mit dem Mikroskop realisiert.

Vorteilhaft ist die Verwendung einer Optik mit bildseitig konstanter numerischer Apertur über den ganzen Vergrößerungsbereich. Dadurch kann die bauseitig vorzuwählende Distanz wischen den Sensoren zur nominellen Bildebene auf ein optimales Maß abgestimmt werden. Als optimal gilt der Abstand zum Wendepunkt der Kontrastkurve, da dort die höchste Steigung und somit die höchste Präzision für die Autofokusregelung vorliegt.

Das System kann insbesondere für ein handgehaltenes Mikroskop verwendet werden. In diesem Fall erfolgt die Bewegung der Fokusebene nicht notwendigerweise motorisiert. Durch geeignetes Feedback an den Bediener kann dieser auch selbständig den Fokus finden und/oder halten. Dabei kann das Halten des Fokus auch motorisch erfolgen. Mit einem kleinen Verfahrbereich, kurzen Aufnahme- und Auswertezeiten und möglichst kleiner bewegter Masse sind sehr kleine Regelzeiten erreichbar. Somit kann eine zuverlässige Stabilisierung der Fokuslage bis zu einer ca. 80-fachen Vergrößerung erreicht werden.

Auch kann durch eine Kompensation der Vignettierung bzw. dem seitlichen Versatz der beiden Sensoren 14a, 14b die Präzision des Systems noch weiter gesteigert werden.

**Bezugszeichenliste**

| | |
|---|---|
| 10 | Mikroskop |
| 11 | Autofokussystem |
| 12a, 12b | Strahlengang |
| 14a, 14b, 25 | Bildsensor |
| 16a, 16b, 30 | Bild |
| 18a, 18b | Bildebene |
| 20 | Schärfeebene |
| 22 | Objektebene |
| 26 | Objektiv |
| 28a, 28b | Strahlteiler |
| 32 | Abbildungssystem |
| 33 | Vorrichtung zur stufenlosen Verstellung des Abbildungsmaßstabes ("Zoom") |
| 34, 36 | Toleranzbereich |
| 100, 200, 300, 400 | Verfahren |
| 110 bis 132, 210 bis 224 | Verfahrenskomponenten |
| 310, 340, 410, 440, 450 | Verfahrenskomponenten |

**Patentansprüche**

1.  Mikroskop (10) umfassend:

    ein Autofokussystem (11) zum Ausführen eines Fokussierungsvorgangs mit einem in einem ersten ausgekoppelten Strahlengang (12a) angeordneten ersten Bildsensor (14a) zum Aufnehmen eines ersten Bildes (16a) und einem in einem zweiten ausgekoppelten Strahlengang (12b) angeordneten zweiten Bildsensor (14b) zum Aufnehmen eines zweiten Bildes (16b),
    wobei das Autofokussystem (11) ausgebildet ist, um basierend auf Kontrastwerten des von dem ersten Bildsensor (14a) aufgenommenen ersten Bildes (16a) und des von dem zweiten Bildsensor (14b) aufgenommenen zweiten Bildes (16b) eine Kontrastdifferenz zu ermitteln, und basierend auf der ermittelten Kontrastdifferenz eine relative Lage der Schärfeebene (20) zur Objektebene (22) einzustellen,
    wobei das erste und zweite Bild (16a, 16b) jeweils von dem jeweils als Flächensensor ausgebildeten ersten und zweiten Bildsensor (14a, 14b) bereitgestellte Bildinformationen umfassen,
    wobei das Autofokussystem (11) derart ausgebildet ist, dass der Fokussierungsvorgang anhand eines ersten Betriebsmodus und eines zweiten Betriebsmodus ausführbar ist,
    wobei das Autofokussystem (11) derart eingerichtet ist, dass es in dem ersten Betriebsmodus Kontrastwerte des von dem ersten Bildsensor (14a) aufgenommenen ersten Bildes (16a) und des von dem zweiten Bildsensor (14b) aufgenommenen zweiten Bildes (16b) und in dem zweiten Betriebsmodus Kontrastwerte des von dem ersten Bildsensor (14a) aufgenommenen ersten Bildes (16a) und des von dem zweiten Bildsensor (14b) aufgenommenen zweiten Bildes (16b) ermittelt, und basierend auf den ermittelten Kontrastwerten die relative Lage der Schärfeebene (20) zur Objektebene (22) einstellt,
    wobei das Autofokussystem (11) ausgebildet ist, um die relative Lage der Schärfeebene (20) zur Objektebene (22) in dem ersten Betriebsmodus so einzustellen, dass die Schärfeebene (20) innerhalb eines ersten Toleranzbereichs um die Objektebene (22) liegt und die relative Lage der Schärfeebene (20) zur Objektebene (22) in dem zweiten Betriebsmodus so einzustellen, dass die Schärfeebene (20) innerhalb eines zweiten Toleranzbereichs um die Objektebene (22) liegt, und
    wobei der zweite Toleranzbereich kleiner als der erste Toleranzbereich ist
    **dadurch gekennzeichnet, dass**

dass das Autofokussystem (11) derart ausgebildet ist, dass der anhand des ersten Betriebsmodus ausführbare Fokussierungsvorgang nur ein einziges Mal zum Finden des Fokus durchgeführt wird, und der anhand des zweiten Betriebsmodus ausführbare Fokussierungsvorgang zum Halten des Fokus so oft wiederholt wird, bis eine vorgegebene Abbruchbedingung erfüllt ist.

2. Mikroskop (10) nach Anspruch 1, **dadurch gekennzeichnet, dass** das Autofokussystem (11) ausgebildet ist, um eine Richtungserkennung für die Einstellung der relativen Lage der Schärfeebene (20) zur Objektebene (22) basierend auf einem Vergleich eines ersten Kontrastwerts des von dem ersten Bildsensor (14a) aufgenommenen ersten Bildes (16a) und eines zweiten Kontrastwerts des von dem zweiten Bildsensor (14b) aufgenommenen zweiten Bildes (16b) durchzuführen.

3. Mikroskop (10) nach Anspruch 2, **dadurch gekennzeichnet, dass** das Autofokussystem (11) ausgebildet ist, um basierend auf der Richtungserkennung die relative Lage der Schärfeebene (20) zur Objektebene (22) derart einzustellen, dass die Schärfeebene (20) in Richtung der Objektebene (22) oder die Objektebene (22) in Richtung der Schärfeebene (20) verschoben wird, so dass sich der Abstand zwischen der Schärfeebene (20) und der Objektebene (22) verringert, wenn der erste Kontrastwert des von dem ersten Bildsensor (14a) aufgenommenen ersten Bildes (16a) größer als der zweite Kontrastwert des von dem zweiten Bildsensor (14b) aufgenommenen zweiten Bildes (16b) ist.

4. Mikroskop (10) nach Anspruch 2 oder 3, **dadurch gekennzeichnet, dass** das Autofokussystem (11) ausgebildet ist, um basierend auf der Richtungserkennung die relative Lage der Schärfeebene (20) zur Objektebene (22) derart einzustellen, dass die Schärfeebene (20) von der Objektebene (22) weg oder die Objektebene (22) von der Schärfeebene (22) weg verschoben wird, so dass sich der Abstand zwischen der Schärfeebene (20) und der Objektebene (22) vergrößert, wenn der zweite Kontrastwert des von dem zweiten Bildsensor (14b) aufgenommenen zweiten Bildes (16b) größer als der erste Kontrastwert des von dem ersten Bildsensor (14a) aufgenommenen ersten Bildes (16a) ist.

5. Mikroskop (10) nach einem der Ansprüche 1 bis 4, **gekennzeichnet durch** ein Abbildungssystem (32) mit einem dritten Bildsensor (25), einem Objektiv (26), einem ersten Strahlteiler (28a) und einem zweiten Strahlteiler (28b), wobei der erste Strahlteiler (28a) in einem Strahlengang zwischen dem Objektiv (26) und dem dritten Bildsensor (25) und in einem Strahlengang zwischen dem Objektiv (26) und dem ersten Bildsensor (14a) angeordnet ist, und wobei der zweite Strahlteiler (28b) in einem Strahlengang zwischen dem Objektiv (26) und dem dritten Bildsensor (25) und in einem Strahlengang zwischen dem Objektiv (26) und dem zweiten Bildsensor (14b) angeordnet ist.

6. Mikroskop (10) nach Anspruch 5, **dadurch gekennzeichnet, dass** der erste Strahlteiler (28a) ausgebildet ist, um eine zur Objektebene (22) konjugierte erste Bildebene (18a) zu erzeugen, und dass der zweite Strahlteiler (28b) ausgebildet ist, um eine zur Objektebene (22) konjugierte zweite Bildebene (18b) zu erzeugen.

7. Mikroskop (10) nach Anspruch 5 oder 6, **dadurch gekennzeichnet, dass** der erste Strahlteiler (28a) und der zweite Strahlteiler (28b) in dem Strahlengang zwischen dem Objektiv (26) und dem dritten Bildsensor (25) beabstandet voneinander angeordnet sind, dass die zur Objektebene (22) konjugierte erste Bildebene (18a) und die zur Objektebene (22) konjugierte zweite Bildebene (18b) in einem Abstand voneinander liegen, und dass der Abstand zwischen der zur Objektebene (22) konjugierten ersten Bildebene (18a) und der zur Objektebene (22) konjugierten zweiten Bildebene (18b) dem Abstand zwischen dem ersten Strahlteiler (28a) und dem zweiten Strahlteiler (28b) entspricht.

8. Mikroskop (10) nach einem der Ansprüche 1 bis 7, **dadurch gekennzeichnet, dass** das Autofokussystem (11) ausgebildet ist, um die relative Lage der Schärfeebene (20) zur Objektebene (22) in dem zweiten Betriebsmodus so einzustellen, dass der Abstand zwischen der Schärfeebene (20) und der Objektebene (22) um einen basierend auf der Kontrastdifferenz ermittelten Offset verringert wird.

9. Mikroskop (10) nach einem der vorhergehenden Ansprüche, **dadurch gekennzeichnet, dass** der Benutzer auf dem Bildsensor einen Teilbereich (ROI = Region of Interest) auswählen kann, auf welchem die Fokusberechnung ausführbar ist.

**Claims**

1. A microscope (10), comprising:

an autofocus system (11) for executing a focusing procedure, having a first image sensor (14a), arranged in a first coupled-out beam path (12a), for acquiring a first image (16a) and a second image sensor (14b), arranged in a second coupled-out beam path (12b), for acquiring a second image (16b),

the autofocus system (11) being configured to ascertain a contrast difference based on contrast values of the first image (16a) acquired by the first image sensor (14a) and of the second image (16b) acquired by the second image sensor (14b), and to set a relative location of the focal plane (20) with respect to the object plane (22) based on the ascertained contrast difference,

the first and the second image (16a, 16b) each comprising image information furnished by the first and the second image sensor (14a, 14b) each configured as an area sensor, the autofocus system (11) being configured such that the focusing procedure is executable on the basis of a first operating mode and a second operating mode,

the autofocus system (11) being configured such that in the first operating mode it ascertains contrast values of the first image (16a) acquired by the first image sensor (14a) and of the second image (16b) acquired by the second image sensor (14b), and in the second operating mode it ascertains contrast values of the first image (16a) acquired by the first image sensor (14a) and of the second image (16b) acquired by the second image sensor (14b), and sets the relative location of the focal plane (20) with respect to the object plane (22) based on the ascertained contrast values,

the autofocus system (11) being configured to set the relative location of the focal plane (20) with respect to the object plane (22) in the first operating mode such that the focal plane (20) lies within a first tolerance region around the object plane (22) and to set the relative location of the focal plane (20) with respect to the object plane (22) in the second operating mode such that the focal plane (20) lies within a second tolerance region around the object plane (22), and

the second tolerance region being smaller than the first tolerance region,

**characterized in that**

the autofocus system (11) being configured such that the focusing procedure executable based on the first operating mode is carried out only one single time for finding the focus, and the focusing procedure for holding the focus, executable based on the second operating mode, is repeated until a predefined termination condition is satisfied.

2. The microscope (10) according to claim 1, **characterized in that** the autofocus system (11) is configured to carry out a direction recognition for setting the relative location of the focal plane (20) with respect to the object plane (22), based on a comparison of a first contrast value of the first image (16a) acquired by the first image sensor (14a) and a second contrast value of the second image (16b) acquired by the second image sensor (14b).

3. The microscope (10) according to claim 2, **characterized in that** the autofocus system (11) is configured to set the relative location of the focal plane (20) with respect to the object plane (22), based on the direction recognition, such that if the first contrast value of the first image (16a) acquired by the first image sensor (14a) is greater than the second contrast value of the second image (16b) acquired by the second image sensor (14b), the focal plane (20) is shifted toward the object plane (22), or the object plane (22) toward the focal plane (20), so that the spacing between the focal plane (20) and the object plane (22) decreases.

4. The microscope (10) according to claim 2 or 3, **characterized in that** the autofocus system (11) is configured to set the relative location of the focal plane (20) with respect to the object plane (22), based on the direction recognition, such that if the second contrast value of the second image (16b) acquired by the second image sensor (14b) is greater than the first contrast value of the first image (16a) acquired by the first image sensor (14a), the focal plane (20) is shifted away from the object plane (22), or the object plane (22) away from the focal plane (22), so that the spacing between the focal plane (20) and the object plane (22) increases.

5. The microscope (10) according to one of claims 1 to 4, **characterized by** an imaging system (32) comprising a third image sensor (25), an objective (26), a first beam splitter (28a) and a second beam splitter (28b), the first beam splitter (28a) being arranged in a beam path between the objective (26) and the third image sensor (25) and in a beam path between the objective (26) and the first image sensor (14a), and the second beam splitter (28b) being arranged in a beam path between the objective (26) and the third image sensor (25) and in a beam path between the objective (26) and the second image sensor (14b).

6. The microscope (10) according to claim 5, **characterized in that** the first beam splitter (28a) is configured to generate a first image plane (18a) conjugated with the object plane (22), and that the second beam splitter (28b) is configured to generate a second image plane (18b) conjugated with the object plane (22) .

7.  The microscope (10) according to claim 5 or 6, **characterized in that** the first beam splitter (28a) and the second beam splitter (28b) are arranged, spaced apart from one another, in the beam path between the objective (26) and the third image sensor (25), that the first image plane (18a) conjugated with the object plane (22) and the second image plane (18b) conjugated with the object plane (22) are located at a spacing from one another, and that the spacing between the first image plane (18a) conjugated with the object plane (22) and the second image plane (18b) conjugated with the object plane (22) corresponds to the spacing between the first beam splitter (28a) and the second beam splitter (28b).

8.  The microscope (10) according to one of the claims 1 to 7, **characterized in that** the autofocus system (11) is configured to set the relative location of the focal plane (20) with respect to the object plane (22) in the second operating mode such that the spacing between the focal plane (20) and the object plane (22) is decreased by an offset ascertained based on the contrast difference.

9.  The microscope (10) according to one of the preceding claims, **characterized in that** the user can select on the image sensor a sub-region (ROI = region of interest) on which the focusing procedure is executable.


**Revendications**

1.  Microscope (10), comprenant :

    un système de mise au point automatique (11) pour effectuer une opération de mise au point avec un premier capteur d'image (14a), disposé sur un premier chemin optique déclenché (12a), pour enregistrer une première image (16a), et un deuxième capteur d'image (14b), disposé sur un deuxième chemin optique déclenché (12b), pour enregistrer une deuxième image (16b),
    le système de mise au point automatique (11) étant réalisé pour établir sur la base de valeurs de contraste de la première image (16a) enregistrée par le premier capteur d'image (14a) et de la deuxième image (16b) enregistrée par le deuxième capteur d'image (14b) une différence de contraste, et pour régler sur la base de la différence de contraste établie une position relative du plan de netteté (20) par rapport au plan d'objet (22),
    la première et la deuxième image (16a, 16b) comprenant des informations d'image fournies respectivement par les premier et deuxième capteurs d'image (14a, 14b) réalisés respectivement sous la forme de capteurs de surface,
    le système de mise au point automatique (11) étant réalisé de telle sorte que l'opération de mise au point peut être effectuée à l'aide d'un premier mode de fonctionnement et d'un deuxième mode de fonctionnement,
    le système de mise au point automatique (11) étant aménagé de telle sorte que dans le premier mode de fonctionnement, il établit des valeurs de contraste de la première image (16a) enregistrée par le premier capteur d'image (14a) et de la deuxième image (16b) enregistrée par le deuxième capteur d'image (14b), et dans le deuxième mode de fonctionnement, il établit des valeurs de contraste de la première image (16a) enregistrée par le premier capteur d'image (14a) et de la deuxième image (16b) enregistrée par le deuxième capteur d'image (14b), et règle une position relative du plan de netteté (20) par rapport au plan d'objet (22) sur la base des valeurs de contraste établies,
    le système de mise au point automatique (11) étant réalisé pour régler la position relative du plan de netteté (20) par rapport au plan d'objet (22) dans le premier mode de fonctionnement de telle sorte que le plan de netteté (20) est situé à l'intérieur d'une première plage de tolérance autour du plan d'objet (22), et pour régler la position relative du plan de netteté (20) par rapport au plan d'objet (22) dans le deuxième mode de fonctionnement de telle sorte que le plan de netteté (20) est situé à l'intérieur d'une deuxième plage de tolérance autour du plan d'objet (22), et
    la deuxième plage de tolérance étant inférieure à la première plage de tolérance,
    **caractérisé en ce que** le système de mise au point automatique (11) est réalisé de telle sorte que l'opération de mise au point pouvant être effectuée à l'aide du premier mode de fonctionnement n'est effectuée qu'une seule fois pour trouver le point focal, et l'opération de mise au point pouvant être effectuée à l'aide du deuxième mode de fonctionnement pour maintenir le point focal est répétée autant de fois que nécessaire jusqu'à ce qu'une condition d'arrêt prédéfinie soit satisfaite.

2.  Microscope (10) selon la revendication 1, **caractérisé en ce que** le système de mise au point automatique (11) est réalisé pour effectuer une reconnaissance de direction pour le réglage de la position relative du plan de netteté (20) par rapport au plan d'objet (22) sur la base d'une comparaison d'une première valeur de contraste de la première image (16a) enregistrée par le premier capteur d'image (14a) et d'une deuxième valeur de contraste de la deuxième image (16b) enregistrée par le deuxième capteur d'image (14b).

3. Microscope (10) selon la revendication 2, **caractérisé en ce que** le système de mise au point automatique (11) est réalisé pour régler, sur la base de la reconnaissance de direction, la position relative du plan de netteté (20) par rapport au plan d'objet (22) de telle sorte que le plan de netteté (20) est décalé en direction du plan d'objet (22), ou le plan d'objet (22) est décalé en direction du plan de netteté (20), de sorte que la distance entre le plan de netteté (20) et le plan d'objet (22) diminue si la première valeur de contraste de la première image (16a) enregistrée par le premier capteur d'image (14a) est supérieure à la deuxième valeur de contraste de la deuxième image (16b) enregistrée par le deuxième capteur d'image (14b).

4. Microscope (10) selon la revendication 2 ou 3, **caractérisé en ce que** le système de mise au point automatique (11) est réalisé pour régler, sur la base de la reconnaissance de direction, la position relative du plan de netteté (20) par rapport au plan d'objet (22) de telle sorte que le plan de netteté (20) est éloigné du plan d'objet (22), ou le plan d'objet (22) est éloigné du plan de netteté (20), de sorte que la distance entre le plan de netteté (20) et le plan d'objet (22) augmente si la deuxième valeur de contraste de la deuxième image (16b) enregistrée par le deuxième capteur d'image (14b) est supérieure à la première valeur de contraste de la première image (16a) enregistrée par le premier capteur d'image (14a).

5. Microscope (10) selon l'une quelconque des revendications 1 à 4, **caractérisé par** un système d'imagerie (32) comprenant un troisième capteur d'image (25), un objectif (26), un premier séparateur de faisceaux (28a) et un deuxième séparateur de faisceaux (28b), le premier séparateur de faisceaux (28a) étant disposé sur un chemin optique entre l'objectif (26) et le troisième capteur d'image (25) et sur un chemin optique entre l'objectif (26) et le premier capteur d'image (14a), et le deuxième séparateur de faisceaux (28b) étant disposé sur un chemin optique entre l'objectif (26) et le troisième capteur d'image (25) et sur un chemin optique entre l'objectif (26) et le deuxième capteur d'image (14b).

6. Microscope (10) selon la revendication 5, **caractérisé en ce que** le premier séparateur de faisceaux (28a) est réalisé pour produire un premier plan d'image (18a) conjugué au plan d'objet (22), et **en ce que** le deuxième séparateur de faisceaux (28b) est réalisé pour produire un deuxième plan d'image (18b) conjugué au plan d'objet (22).

7. Microscope (10) selon la revendication 5 ou 6, **caractérisé en ce que** le premier séparateur de faisceaux (28a) et le deuxième séparateur de faisceaux (28b) sont disposés sur le chemin optique entre l'objectif (26) et le troisième capteur d'image (25) à distance l'un de l'autre, **en ce que** le premier plan d'image (18a) conjugué au plan d'objet (22) et le deuxième plan d'image (18b) conjugué au plan d'objet (22) sont situés à distance l'un de l'autre, et **en ce que** la distance entre le premier plan d'image (18a) conjugué au plan d'objet (22) et le deuxième plan d'image (18b) conjugué au plan d'objet (22) correspond à la distance entre le premier séparateur de faisceaux (28a) et le deuxième séparateur de faisceaux (28b).

8. Microscope (10) selon l'une quelconque des revendications 1 à 7, **caractérisé en ce que** le système de mise au point automatique (11) est réalisé pour régler la position relative du plan de netteté (20) par rapport au plan d'objet (22) dans le deuxième mode de fonctionnement de telle sorte que la distance entre le plan de netteté (20) et le plan d'objet (22) est diminuée d'un décalage établi sur la base de la différence de contraste.

9. Microscope (10) selon l'une quelconque des revendications précédentes, **caractérisé en ce que** l'utilisateur peut sélectionner sur le capteur d'image une zone partielle (ROI = région d'intérêt) dans laquelle le calcul de mise au point peut être effectué.

100

```
                    ┌─────────────────┐
                    │  Starte Fokus   │─── 110
                    │    finden       │
                    └─────────────────┘
                             │
        ┌────────────────────┼────────────────────┐
        ▼                                          ▼
┌─────────────────┐                      ┌─────────────────┐
│  Bildaufnahme   │                      │  Bildaufnahme   │─── 112b
│    Kamera 1     │                      │    Kamera 2     │
└─────────────────┘                      └─────────────────┘
   112a   │                                         │
        ▼                                          ▼
┌─────────────────┐                      ┌─────────────────┐
│ Bildanalyse A₁ im│                     │ Bildanalyse A₂ im│─── 114b
│ 1. Betriebsmodus │                     │ 1. Betriebsmodus │
└─────────────────┘                      └─────────────────┘
   114a
```

$D_i = A_1 - A_2$ — 116

118 $D_i \times D_{i-1} > 0$ ? — Nein

Ja

120 $D_i > 0$ ? — Nein

Ja

122 Präparat 2.5 x DOF anheben

124 Präparat 2.5 x DOF absenken

126 Senken / Heben rückgängig machen

128 $i \leqq 16$ ? — Nein

Ja

130

132

200

```
         ┌─────────────────┐
         │  Starte Fokus   │── 210
         │     halten      │
         └────────┬────────┘
                  │
     ┌────────────┼────────────┐
     │            │            │
     ▼            ▼            ▼
```

┌──────────────────┐          ┌──────────────────┐
│  Bildaufnahme    │          │  Bildaufnahme    │── 212b
│    Kamera 1      │          │    Kamera 2      │
└────────┬─────────┘          └────────┬─────────┘
   212a                                │
         ▼                             ▼
┌──────────────────┐          ┌──────────────────┐
│  Bildanalyse im  │          │  Bildanalyse im  │── 214b
│  2. Betriebsmodus│          │  2. Betriebsmodus│
└────────┬─────────┘          └────────┬─────────┘
   214a                                │
         └──────────────┬──────────────┘
                        ▼
         ┌──────────────────────────┐
         │ Fokus Offset, O = f(B1,B2),│── 218
         │     bestimmen aus         │
         │    Bildanalysedaten       │
         └─────────────┬────────────┘
                       │
          220          ▼
                 ◇─────────────◇        Nein
                ◇  O > DOF/2 ?  ◇──────────────┐
                 ◇─────────────◇               │
                       │                        │
                      Ja                        │
    222                │              224        │
         ▼             ▼                         ▼
┌──────────────────┐          ┌──────────────────┐
│    Präparat      │          │  Fokus halten    │
│ um den Offset    │          │  abgeschlossen   │
│   verfahren      │          │                  │
└──────────────────┘          └──────────────────┘

**FIG. 3**

300

| Starte Einmal-Fokussierung | — 310 |

↓

| Fokus finden | — 100 |

↓

| Fokus halten | — 200 |

↓

| Fokussierung abgeschlossen | — 340 |

**FIG. 4a**

400

| Starte fortlaufende Fokussierung | — 410 |

↓

| Fokus finden | — 100 |

↓

| Fokus halten | — 200 |

440

Abbruch? — Nein

Ja

Vmin

Vmax

**Vmin**

*nA'*

*nA*

**Vmax**

*nA'*

*nA*

22

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 2836428 A1
- US 6128129 A
- US 2008099661 A1